# FASCICULE DE BREVET EUROPEEN

(11) **EP 0 595 738 B1**
(45) Date de publication et mention de la délivrance du brevet: **11.06.1997**
(21) Numéro de dépôt: 93420423.1
(22) Date de dépôt: 27.10.1993
(51) Int. Cl.: A22B 5/00

(54) **Machine et procédé pour appliquer des cachets sanitaires sur un animal**
Maschine und Verfahren zum Anbringen von Sanitärstempeln an Tieren
Machine and process of applying a sanitary stamp on an animal

(30) Priorité: 27.10.1992 FR 9213127
(43) Date de publication de la demande: 04.05.1994
(73) Titulaire: Société Anonyme : DURAND INTERNATIONAL, F-07210 Chomerac (FR)
(72) Inventeur: Durand, Lucien, F-07000 Lyas (FR)
(74) Mandataire: Thibault, Jean-Marc

(56) Documents cités:
- EP-A- 0 273 371
- FR-A- 2 523 813
- FR-A- 2 545 010
- FR-A- 2 546 423
- FR-A- 2 620 596

## Description

La présente invention concerne le domaine de l'abattage industriel des animaux de boucherie, au sens général, et elle vise, en particulier, l'abattage des porcs.

L'objet de l'invention concerne, plus particulièrement, la phase qui suit celles d'abattage et d'éviscération, au cours de laquelle est assuré un contrôle vétérinaire, afin de déterminer si l'animal est propre ou non à la consommation.

Il convient de rappeler que la loi impose que chaque animal de boucherie abattu soit soumis à un contrôle sanitaire. Le vétérinaire ayant accompli cet examen applique, sur les animaux respectant les règles de salubrité, un cachet officiel sur différentes parties de chaque animal qui sont désignées explicitement par la législation. Dans le domaine du contrôle sanitaire des porcs abattus, il est prévu actuellement par la loi d'apposer, sur chaque demie carcasse d'un porc, cinq cachets sanitaires, respectivement sur la joue, l'épaule, le plat de côte, la longe et le jambon.

Il est connu dans l'art antérieur, d'appliquer des cachets sanitaires par l'intermédiaire d'un tampon manoeuvré manuellement. Il est clair que l'apposition des cachets sanitaires sur les animaux de boucherie constitue une opération délicate, pénible et fastidieuse à mener à bien. De plus, cette opération présente une durée d'exécution qui devient de plus en plus incompatible avec la vitesse des chaînes d'abattage industriel. Dans le même sens, la durée de cette opération a tendance à s'accroître, dans la mesure où la législation vise à augmenter le nombre de cachets sanitaires devant être apposés sur les animaux de boucherie.

Il apparaît donc le besoin de disposer de moyens permettant d'automatiser l'opération d'application des cachets officiels sur les animaux abattus, tout en conservant l'autorisation vétérinaire pour chaque animal.

Pour tenter de satisfaire ce besoin, il a été proposé diverses solutions techniques. Ainsi, la demande de brevet FR-A-2 523 813 décrit un appareil de marquage adapté pour apposer des cachets sur des carcasses d'animaux abattus et suspendus à un convoyeur. L'appareil comporte une rampe de guidage s'étendant parallèlement au sens de défilement des carcasses pour permettre à ces dernières de venir en appui sur la rampe, au cours de l'opération de marquage. Un détecteur de présence est monté sur la rampe de guidage, de manière à permettre de commander en pivotement deux bras équipés chacun d'un tampon de marquage.

Un tel appareil ne donne pas satisfaction en pratique. En effet, l'animal ne se trouve pas maintenu efficacement lors du marquage, ce qui nuit à l'efficacité de l'opération de marquage. Dans le même sens, le frottement de l'animal sur la rampe de guidage est à même d'aboutir à un défilement de l'animal par à coups, affectant l'apposition correcte des tampons. De plus, un tel appareil n'est pas adapté pour assurer l'application d'une série de tampons sur chaque demie carcasse de l'animal.

La demande de brevet EP 0 273 371 a également proposé une installation assurant divers examens et traitements sur les animaux abattus et permettant, notamment, l'application de tampons. Cette installation comporte une série de chariots mobiles se déplaçant sur un circuit fermé et destiné à assurer la prise en charge des animaux abattus lors de leur passage devant différents postes d'examen et, notamment, un poste de marquage. Le poste de marquage est composé d'une série de bras articulés montés sur une colonne fixe et munis chacun d'un tampon. Les bras sont commandés en pivotement, lorsque le chariot de support de l'animal passe devant le poste de marquage.

L'installation décrite par ce document est manifestement très complexe à mettre en oeuvre et présente un coût de fabrication prohibitif. De plus, il s'avère particulièrement délicat d'obtenir un marquage efficace, en raison du principe même de cette installation qui consiste à appliquer des tampons montés à poste fixe sur un animal abattu entraîné en défilement.

La présente invention vise donc à remédier aux inconvénients des techniques antérieures, en proposant une machine conçue pour assurer la bonne application des tampons sur diverses parties de la peau d'un animal abattu et pour être intégrée à une chaîne d'abattage industriel, sans entraîner de modification à cette dernière.

Un autre objet de l'invention vise à offrir une machine apte à permettre l'application destampons sur les diverses parties de l'animal imposées par la loi et ce, quelle que soit la taille de l'animal.

L'objet de l'invention vise, aussi, à proposer une machine capable de s'adapter à la configuration d'accrochage de l'animal abattu et suspendu au convoyeur de déplacement.

Pour atteindre ces différents objectifs, la machine selon l'invention se présente sous la forme d'un bâti destiné à être placé latéralement par rapport à la direction de défilement du convoyeur et équipé d'un moyen de maintien de l'animal et d'au moins un couple de bras équipés chacun d'au moins un tampon et commandés en rapprochement-éloignement relatifs.

Conformément à l'invention, le bâti comporte une structure porteuse supportant un châssis de préhension et de tamponnage déplaçable par un organe moteur, selon une direction sensiblement horizontale pour s'étendre en dehors du plan d'extension de la structure porteuse, le châssis comportant :
- une structure d'appui et de centrage se développant sensiblement dans un plan vertical sur une hauteur au plus égale et, en général, inferieure à la taille de l'animal et destinée à être engagée entre les deux demies carcasses de l'animal,
- au moins un couple de bras presseurs commandés en rapprochement-éloignement relatifs par rapport à la structure d'appui et de centrage et destinés à venir en contact avec les parties extérieures opposées des demies carcasses de l'animal, afin d'assurer, en combinaison avec la structure d'appui et de centrage, une immobilisation de l'animal.

L'objet de l'invention vise, également, à proposer un procédé d'application des cachets sanitaires,
comme décrit dans la revendication 9.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **Fig. 1** est une vue en élévation de face d'un exemple de réalisation d'une machine conforme à l'invention.

Les **Fig. 2** et **3** sont des coupes transversales prises sensiblement selon les lignes II-II de la **Fig. 1** et illustrant la machine respectivement en position de repos et en position de fonctionnement.

Les **Fig. 4A** à **4D** sont des coupes transversales horizontales prises sensiblement selon les lignes IV-IV de la **Fig. 1** et illustrant la machine selon diverses phases caractéristiques de fonctionnement.

La **Fig. 5** est une vue en coupe d'un détail caractéristique de la machine selon l'invention, relatif au montage d'un tampon d'application des cachets sanitaires.

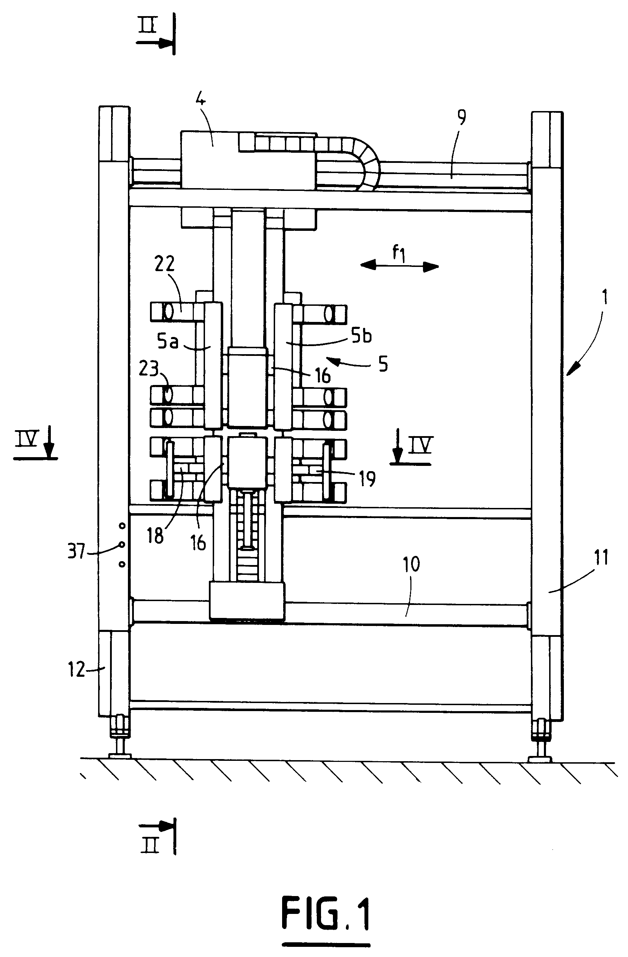

La machine **1** selon l'invention, telle qu'illustrée aux **Fig. 1** à **3**, est destinée à assurer l'application de cachets, par exemple, sanitaires sur la peau d'animaux de boucherie **2**, tels que des porcs qui, après l'abattage proprement dit, sont suspendus par les pattes arrières à un convoyeur **3** les entraînant préférentiellement en défilement continu devant différents postes ou stations d'intervention. Dans la description qui suit, chaque animal suspendu **2** se présente sous la forme de deux demies carcasses **2**_{**1**} et **2**_{**2**} s'étendant soit sensiblement parallèlement entre elles, dans le cas où elles sont complètement séparées, soit en formant un V, dans l'hypothèse où les carcasses se trouvent réunies ensemble en un point bas.

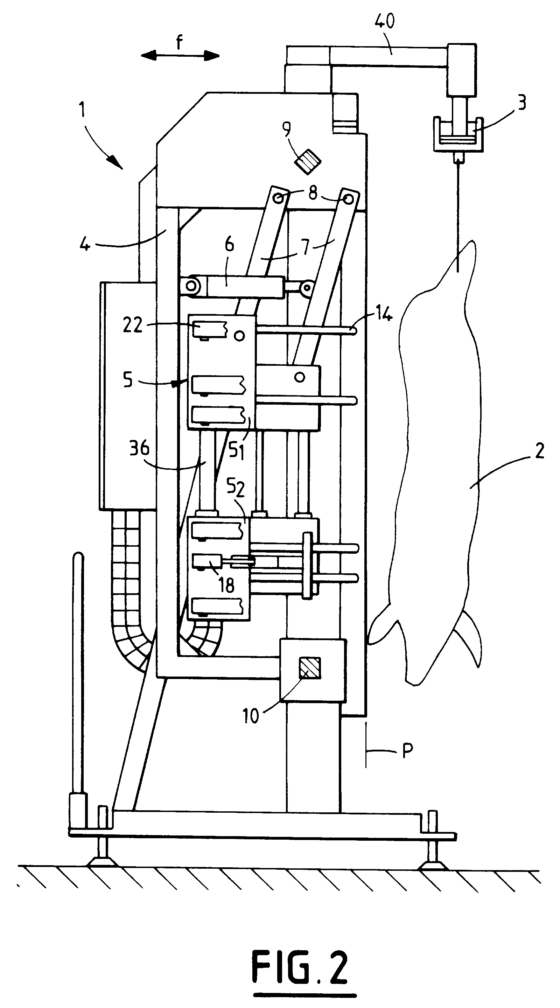

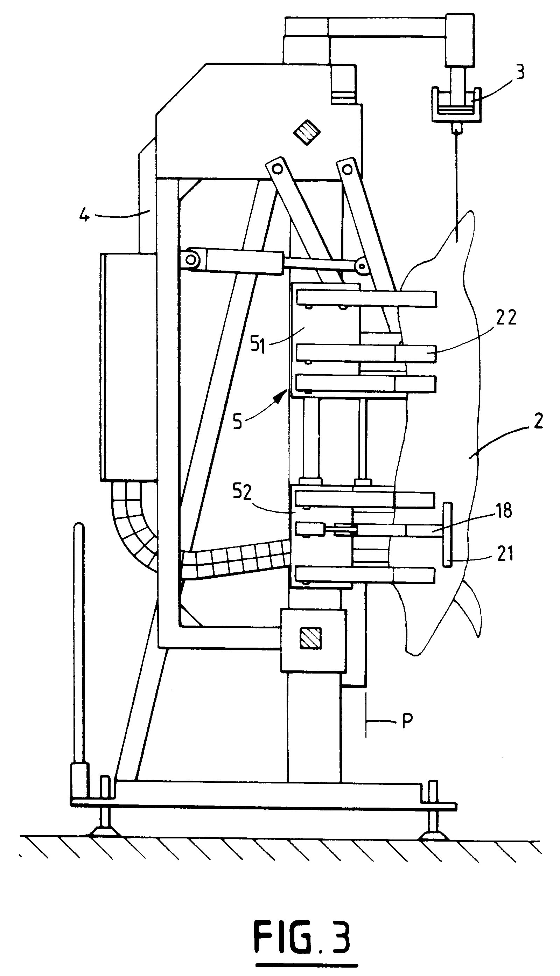

La machine **1** comprend une structure porteuse **4** supportant un châssis de préhension et de tamponnage **5** déplaçable par un organe moteur approprié **6**, dans le sens des flèches **f**, entre des positions rentrée et sortie, respectivement illustrées aux **Fig. 2** et **3**. L'organe moteur **6** est destiné à déplacer le châssis **5** selon une direction sensiblement horizontale et de manière que le châssis **5** puisse s'étendre en dehors du plan d'extension **P** de la structure porteuse **4**. L'organe moteur **6** peut être constitué par un vérin imposant un déplacement horizontal purement linéaire au châssis **5** monté alors sur des glissières présentées dans la direction correspondante par la structure **4**. Tel que ressort plus précisément des **Fig. 2** et **3**, la liaison entre le châssis **5** et la structure **4** peut être prévue de telle manière que le déplacement horizontal dans la direction des flèches **f** soit du type pendulaire. Dans un tel cas, le châssis **5** est suspendu à un parallélogramme déformable formé de deux bielles **7** articulées sur des axes **8** portés par la structure **4**.

Dans l'exemple illustré, la structure porteuse **4** est montée mobile en translation selon une direction **f**_{**1**} sensiblement perpendiculaire à la direction **f** de déplacement du châssis **5**. A cet effet, la structure **4** est guidée en déplacement sur des glissières supérieure **9** et inférieure **10** portées par des montants **11**. Tel que cela apparaît plus précisément à la **Fig. 1**, les montants **11** sont montés sur un bâti **12**, de manière à être réglables verticalement par tous moyens appropriés. Une telle possibilité de réglage permet d'adapter la position de la structure **4** et par suite du châssis **5**, à la position occupée par l'animal suspendu **2** qui dépend de la nature de son système d'accrochage.

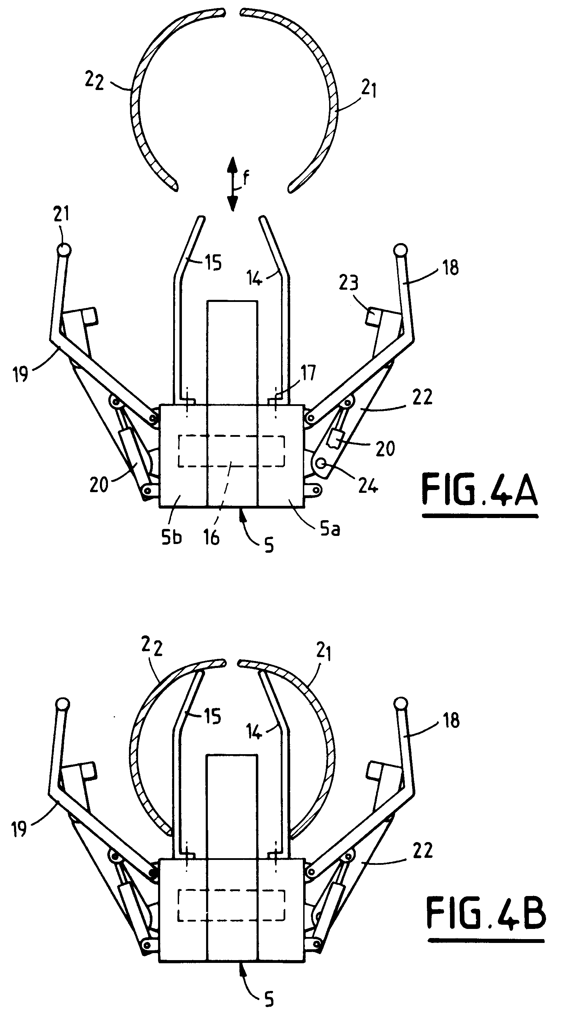

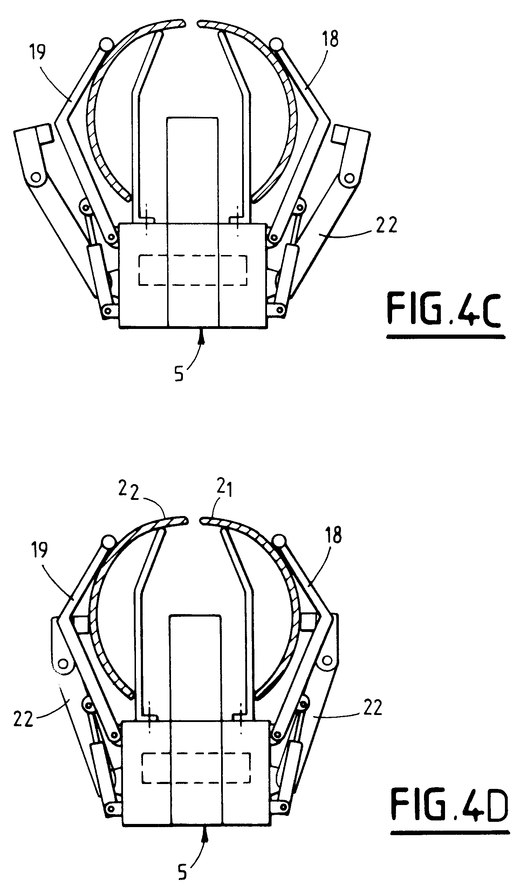

Le châssis **5** comporte une structure d'appui et de centrage formée, dans l'exemple illustré, par deux systèmes d'appui **14** et **15** se développant chacun sensiblement dans un plan vertical. Chaque système d'appui **14**, **15** est formé, par exemple, par une série de tiges superposées, réparties sur une hauteur au plus égale et, en général, inférieure à la taille de l'animal **2**. Dans l'exemple illustré, chaque système d'appui **14**, **15** est formé par quatre tiges présentant, d'un système à l'autre, une répartition identique et adaptée pour permettre un appui de l'animal au moins au niveau de ses régions d'extrémités. Avantageusement, les systèmes **14** et **15** forment entre eux une structure d'appui et de centrage destinée à être engagée entre les deux demies carcasses **2**_{**1**} et **2**_{**2**} de l'animal (**Fig. 4A**). Afin de faciliter leur insertion entre les deux demies carcasses, chaque tige **14** et **15** présente, de préférence, un segment rectiligne parallèle à la direction **f**, prolongé par un segment incurvé en direction de la tige de l'autre système d'appui, placée à un même niveau. Chaque système **14** et **15** constitue ainsi un plan d'appui pouvant être formé par une structure continue, telle qu'une joue ou, comme illustré sur les dessins, par une structure discontinue formée par des tiges superposées.

Selon une caractéristique avantageuse, les systèmes d'appui **14** et **15** sont réglables en écartement relatif, afin de s'adapter à la distance et à l'inclinaison relative des deux demies carcasses **2**_{**1**}, **2**_{**2**}. A cet effet, les tiges de chaque système d'appui **14** et **15** sont fixées respectivement sur deux blocs support superposés **5a**, **5b** aménagés de part et d'autre du châssis **5** et montés sur des traverses **16** par l'intermédiaire de moyens d'assemblage temporaire non représentés.

Le châssis **5** comporte, également, au moins deux bras presseurs ou de serrage **18**, **19** montés symétriquement sur les blocs support **5a**, **5b** du châssis **5** en s'étendant en superposition, de part et d'autre des systèmes d'appui **14** et **15** (**Fig. 4A**). Chaque bras presseur **18** est commandé par l'intermédiaire d'un organe moteur approprié **20** en rapprochement et éloignement relatifs par rapport aux systèmes d'appui respectifs **14** et **15**. Chaque bras presseur **18**, **19** est formé par un levier pourvu, à sa partie terminale, d'un cylindre vertical **21** destiné à agir sur des parties extérieures opposées des demies carcasses. De préférence, les bras **18**, **19** assurent le serrage de l'animal dans sa région d'extrémité inférieure. Les bras presseurs **18**, **19** et les systèmes d'appui **14**, **15** forment ainsi un moyen d'immobilisation efficace d'un animal par rapport au châssis **5**.

Le châssis **5** est équipé, également, d'au moins un et, dans l'exemple illustré, de deux séries de cinq bras tamponneurs **22** pourvus chacun d'au moins un tampon **23**. Chaque bras tamponneur **22** est commandé par un organe moteur non représenté, tel qu'un vérin rotatif, en rapprochement et en éloignement relatifs par rapport aux systèmes d'appui **14**, **15** ou aux bras presseurs **18**, **19**. Les bras **22** de chaque série sont montés symétriquement sur les blocs support **5a**, **5b**. Chaque bras **22** est monté sur un axe **24** dont l'inclinaison par rapport à la verticale peut être réglée, en vue d'ajuster la position spatiale occupée par le tampon.

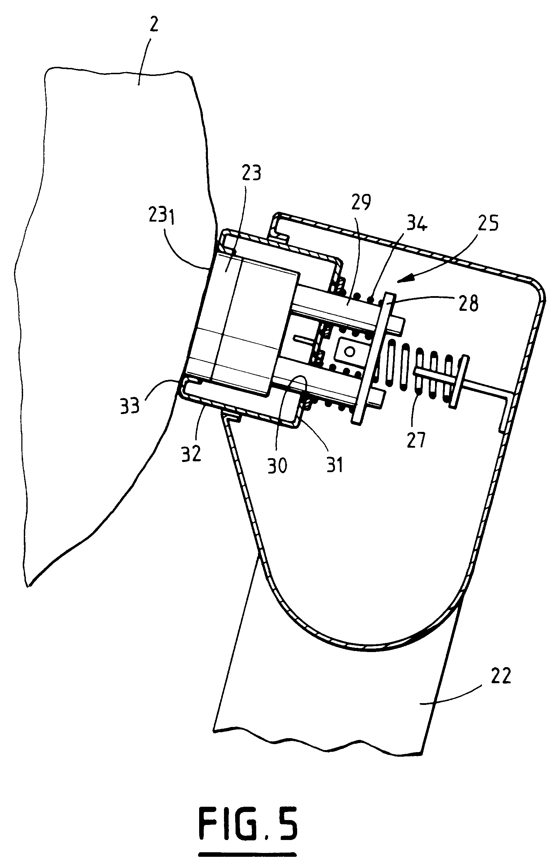

Selon une caractéristique de l'invention, illustrée plus précisément à la **Fig. 5**, chaque tampon **23** est monté sur un bras **22** par des moyens **25** de maintien omnidirectionnel assurant une application correcte du tampon **23** sur la peau de l'animal, quelle que soit sa conformation locale présentée par rapport au mouvement du bras tamponneur. Dans l'exemple illustré, les moyens de maintien **25** sont constitués par l'intermédiaire d'un ressort **27** agissant sur une platine **28** montée solidaire du tampon **23** à l'aide de tiges de liaison **29**. Avantageusement, les tiges de liaison **29** traversent des passages **30** ménagés dans une paroi **31** du bras presseur **22** et présentant une section supérieure à la section locale des tiges, de manière à autoriser un débattement angulaire omnidirectionnel du tampon par rapport au bras presseur **22**. De préférence, le bras presseur **22** est muni d'un manchon de protection **32** délimitant une surface annulaire d'appui et de centrage **33** du tampon. La sortie du tampon **23** par rapport au manchon **32** est assurée par l'intermédiaire de ressorts de rappel **34** interposés entre la paroi **31** du bras presseur et la platine de liaison **28**. Afin d'obtenir une application de la totalité de dessin du tampon, tel qu'un cachet sanitaire, chaque tampon **23** comporte une face de gravure **23**_{**1**} conformée sous la forme d'une calotte ou d'un dôme à profil continu courbe ou segmenté se présentant ainsi sous une forme hémisphérique, pseudo hémisphérique ou d'un empilement de tronçons ou de rondelles de section pyramidale dont leur dimension décroit de la base au sommet. Avantageusement, chaque tampon **23** comporte des passages ou des évents débouchant sur la face de gravure **23**_{**1**} et sur les côtés ou la face arrière du tampon, afin d'assurer l'évacuation de la vapeur créée lors du tamponnage.

Selon une caractéristique de l'invention, le châssis de préhension et de tamponnage **5** est composé d'une partie supérieure fixe **5**_{**1**} et d'une partie inférieure mobile verticalement **5**_{**2**}. Chaque partie **5**_{**1**} et **5**_{**2**} du châssis comporte des bras tamponneurs **22** et une partie des systèmes d'appui **14** et **15**. De préférence, les bras presseurs **18**, **19** sont montés sur la partie inférieure mobile **5**_{**2**}. La partie inférieure **5**_{**2**} du châssis est guidée en déplacement vertical par l'intermédiaire de colonnes de guidage **36** fixées sur la partie fixe **5**_{**1**}. La partie mobile **5**_{**2**} est commandée en déplacement vertical à l'aide d'un organe moteur non représenté qui est piloté à partir d'une information sur la taille de l'animal, décelée par un capteur approprié **37**. Tel que cela ressort de la **Fig. 1**, le capteur **37** peut être constitué par une série de cellules opto-électroniques superposés placés sur l'un des montants du bâti **12**. Ce capteur **37** est relié à un circuit de traitement qui détermine la position que doit prendre la partie inférieure **5**_{**2**} du châssis pour assurer l'application des tampons **23** sur les différentes régions de l'animal prévues par la loi. Dans l'exemple illustré, la partie mobile **5**_{**2**} du châssis comporte deux séries de deux bras tamponneurs **22** assurant l'application des tampons **23** sur la joue et l'épaule, tandis que la partie fixe **5**_{**1**} du châssis permet l'apposition de deux séries de trois tampons sur le jambon, la longe et le plat de côte.

Le fonctionnement de la machine **1** selon l'invention découle directement de la description qui précède.

La machine **1** selon l'invention est destinée à être placée latéralement par rapport à la direction de défilement du convoyeur **3** qui est considérée comme parallèle à celle de déplacement **f**_{**1**} de la structure **4**. Le plan d'extension **P** de la structure **4** est placé à une distance proche du plan de déplacement du convoyeur, dont la mesure peut être déterminée à l'aide d'une entretoise de liaison **40** fixée entre le bâti **12** et le convoyeur **3**. La machine **1** est installée sur l'un des côtés du convoyeur, de manière à être montée face à l'ouverture thoracico-abdominale des animaux suspendus **2**, dans le cas où la carcasse de l'animal est entière et côté lombaire ou dorsale si la carcasse de l'animal est fendue. Le procédé selon l'invention consiste à effectuer l'opération de tamponnage des diverses parties de l'animal, préférentiellement à poste volant, comme illustré sur les dessins, lorsque l'animal **2** est entraîné en défilement constant. Après la détection de la présence d'un animal, en relation d'une distance donnée de la machine à l'aide d'un contacteur placé sur le trajet du convoyeur, et une détection de sa taille par le capteur **37**, la partie inférieure **5**_{**2**} du châssis est placée à un niveau donné pour assurer une application des tampons sur les régions déterminées de l'animal.

La structure porteuse **4** est ensuite commandée pour subir une translation concomitante de même vitesse et de même sens que le défilement imposé à l'animal **2** par le convoyeur **3**. L'organe moteur **6** est ensuite piloté pour assurer le déplacement du châssis **5** en direction du plan de défilement du convoyeur **3**, de manière que les systèmes d'appui **14** et **15** s'étendent en dehors du plan d'extension **P** de la structure porteuse et viennent ainsi s'engager entre les deux demies carcasses **2**_{**1**}, **2**_{**2**} de l'animal (**Fig. 4B**). Les bras presseurs **18**, **19** sont commandés en rapprochement relatif par rapport aux systèmes d'appui **14** et **15**, afin de venir en contact avec l'animal, de manière à obtenir par serrage son immobilisation. L'animal est ainsi placé à l'aplomb selon une référence fixe.

Les bras tamponneurs **22** sont ensuite commandés, de préférence, simultanément pour venir en appui sur la peau de l'animal et appliquer le cachet sanitaire sur les régions localisées exigées par la loi (**Fig. 4D**). Les tampons sont maintenus sur la peau de l'animal, pendant une durée donnée, dans le cas de l'utilisation de tampons chauffants. Il est à noter que le temps d'application des tampons sur la peau de l'animal ne constitue pas une opération critique, dans la mesure où les tampons sont déplacés à la même vitesse que l'animal. Le montage combiné des bras tamponneurs et des moyens de maintien en position de l'animal, sur un même châssis **5**, permet d'assurer une application correcte des tampons sur la peau de l'animal et, par suite, une bonne impression de marquage.

Après l'application des tampons sur la peau de l'animal, les tampons, ainsi que les bras presseurs **18**, **19**, sont commandés en éloignement relatif. Les systèmes d'appui **14** et **15** peuvent, ensuite, être dégagés des demies carcasses, lors d'une commande de l'organe moteur **6** dans un sens d'éloignement des tiges par rapport au plan de défilement du convoyeur. La structure porteuse **4** est alors déplacée dans un sens contraire à celui du défilement des animaux pour revenir à sa position initiale, en vue d'être prête à effectuer une nouvelle opération de marquage pour un animal se présentant devant la machine.

Le procédé selon l'invention permet d'assurer l'application des cachets officiels sur les différentes parties de l'animal imposées par la législation. Bien entendu, la machine selon l'invention est apte à appliquer un nombre différent, voire supérieur de tampons, afin de s'adapter aux dispositions légales en vigueur. L'apposition des divers tampons s'effectue au cours du processus de convoyage des animaux sans nécessiter de modification à l'installation d'abattage. De plus, il s'avère que l'animal est maintenu efficacement en position selon toute sa longueur, lors de l'application des tampons permettant une bonne application des tampons.

L'invention n'est pas limitée aux exemples décrits et représentés, car diverses modifications peuvent y être apportées sans sortir de la portée des revendications.

## Revendications

1. Machine pour appliquer des tampons sur la peau d'un animal (**2**) abattu et suspendu à un convoyeur (**3**), la machine se présentant sous la forme d'un bâti (**12**) destiné à être placé latéralement par rapport à la direction de défilement du convoyeur (**3**) et équipé d'un moyen de maintien de l'animal et d'au moins un couple de bras (**22**) équipés chacun d'au moins un tampon (**23**) et commandés en rapprochement-éloignement relatifs,
caractérisée en ce que que le bâti (**12**) comporte une structure porteuse (**4**) supportant un châssis de préhension et de tamponnage (**5**) déplaçable par un organe moteur (**6**), selon une direction sensiblement horizontale (**f**) pour s'étendre en dehors du plan d'extension (**P**) de la structure porteuse (**4**), le châssis (**5**) comportant :
- une structure d'appui et de centrage (**14**, **15**) se développant sensiblement dans un plan vertical sur une hauteur au plus égale et, en général, inférieure à la taille de l'animal et destinée à être engagée entre les deux demies carcasses de l'animal,
- au moins un couple de bras presseurs (**18**, **19**) commandés en rapprochement-éloignement relatifs par rapport à la structure d'appui et de centrage (**14**, **15**) et destinés à venir en contact avec les parties extérieures opposées des demies carcasses de l'animal, afin d'assurer, en combinaison avec la structure d'appui et de centrage (**14**, **15**), une immobilisation de l'animal.

2. Machine selon la revendication 1, caractérisée en ce que le châssis de préhension et de tamponnage (**5**) est composé d'une partie supérieure fixe (**5**_{**1**}) et d'une partie inférieure mobile verticalement (**5**_{**2**}) et en ce que la machine comporte un dispositif (**37**) de détection de la taille de l'animal, adapté pour commander le déplacement de la partie inférieure mobile (**5**_{**2**}), afin de permettre l'application des tampons sur les régions choisies de l'animal.

3. Machine selon la revendication 1, caractérisée en ce que la structure porteuse (**4**) est montée sur le bâti (**12**) pour être déplaçable selon une direction horizontale (**f**_{**1**}) perpendiculaire à la direction de mouvement (**f**) du châssis de préhension et de tamponnage (**5**).

4. Machine selon la revendication 1, caractérisée en ce que la structure d'appui et de centrage (**14**, **15**) est formée par deux systèmes.

5. Machine selon la revendication 1, caractérisée en ce que chaque bras tamponneur (**22**) est aménagé pour comporter des moyens (**25**) de maintien omnidirectionnel d'un tampon (**23**).

6. Machine selon la revendication 5, caractérisée en ce que chaque tampon (**23**) est monté sur des moyens de rappel élastique (**34**) et se trouve muni d'un manchon de protection (**32**) fixé au bras tamponneur (**22**).

7. Machine selon la revendication 6, caractérisée en ce que chaque tampon (**23**) comporte une face de gravure (**23**_{**1**}) conformée sous la forme d'une calotte ou d'un empilement de rondelles de section pyramidale dont leur dimension décroit de la base au sommet.

8. Machine selon la revendication 5 ou 6, caractérisée en ce que chaque tampon (**23**) comporte une face de gravure (**23**_{**1**}) dans laquelle débouchent des évents d'évacuation de la vapeur créée lors du tamponnage.

9. Procédé pour appliquer des tampons sur un animal (**2**) à partir d'une machine conforme à la revendication 1, du type consistant à :
- placer la machine (**1**) latéralement par rapport à la direction (**f**_{**1**}) de déplacement du convoyeur (**3**),
- et à détecter la présence d'un animal abattu et suspendu (**2**) au convoyeur (**3**), à une distance donnée de la machine,
caractérisé en ce qu'il consiste ensuite à :
- déplacer le châssis de préhension et de tamponnage (**5**) transversalement à la direction (**f**_{**1**}) de déplacement du convoyeur (**3**), de manière qu'une structure d'appui et de centrage s'engage entre deux demies carcasses de l'animal,
- commander au moins un couple de bras presseur (**18**, **19**) en rapprochement par rapport à la structure d'appui, pour venir en contact avec les parties extérieures opposées des demies carcasses d'animal afin de venir immobiliser l'animal,
- commander au moins un couple de bras tamponneurs (**22**) en rapprochement relatif de la structure d'appui, afin d'assurer l'application du tampon sur la peau de l'animal,
- piloter les bras tamponneurs (**22**) et les bras presseurs (**18**, **19**) en éloignement relatif par rapport au système d'appui,
- et à dégager le châssis de préhension et de tamponnage (**5**) par rapport au convoyeur (**3**).

10. Procédé selon la revendication 10, caractérisé en ce qu'il consiste à détecter la taille de l'animal (**2**) et à asservir en position verticale au moins un couple de bras tamponneurs (**22**).

11. Procédé selon la revendication 10, caractérisé en ce qu'il consiste, dès la détection de la présence d'un animal, à déplacer le châssis de préhension et de tamponnage (**5**), selon une direction (**f**_{**1**}) parallèle à celle du convoyeur et à une vitesse synchronisée avec la vitesse du convoyeur.

## Claims

1. A machine for applying stamps on the skin of a slaughtered animal (2) suspended from a conveyor (3), the machine being in the form of a frame (12) intended to be placed laterally with respect to the direction of advance of the conveyor (3) and equipped with a means for holding the animal and with at least one pair of arms (22) each equipped with at least one pad (23), whose relative movement towards and away from each other is controlled,
characterised in that the frame (12) comprises a bearing structure (4) supporting a gripping and ramming chassis (5) adapted to be displaced by a drive member (6) in a substantially horizontal direction (f) to extend outside the plane of extension (P) of the bearing structure (4), the chassis (5) comprising:
- a bearing and centering structure (14, 15) developing substantially in a vertical plane over a height at the most equal to, and in general less than the size of the animal and intended to be engaged between the two half-carcasses of the animal,
- at least one pair of presser arms (18, 19) adapted to be relatively moved towards and away from each other with respect to the beating and centering structure (14, 15) and intended to come into contact with the opposite outer parts of the half-carcasses of the animal, in order to ensure, in combination with the bearing and centering structure (14, 15), immobilisation of the animal.

2. The machine according to claim 1, characterised in that the gripping and ramming chassis (5) comprises a fixed upper part (5₁) and a vertically mobile lower part (5₂)and in that the machine comprises a device (37) for detecting the size of the animal that is adapted to control the displacement of the mobile lower part (5₂) in order to allow application of the pads on the selected regions of the animal.

3. The machine according to claim 1, characterised in that the bearing structure (4) is mounted on the frame (12) to be displaceable in a horizontal direction (f₁) perpendicular to the direction (f) of movement of the gripping and ramming chassis (5).

4. The machine according to claim 1, characterised in that the bearing and centering structure (14, 15) is formed by two systems.

5. The machine according to claim 1, characterised in that each rammer arm (22) is arranged so as to include means (25) for omnidirectional holding of a pad (23).

6. The machine according to claim 5, characterised in that each pad (23) is mounted on elastic return means (34) and is provided with a protecting sleeve (32) fixed to the rammer arm (22).

7. The machine according to claim 6, characterised in that each pad (23) comprises a marking face (23₁) in the form of a cap or a stack of washers of pyramidal section whose dimension decreases from the base to the apex.

8. The machine according to claim 5 or 6, characterised in that each pad (23) comprises a marking face (23₁) into which open out vents for evacuating vapour created during ramming.

9. A process for applying pads on an animal (2) from a machine in accordance with claim 1, of the type consisting in:
- placing the machine (1) laterally with respect to the direction (f₁) of displacement of the conveyor (3), and
- detecting the presence of a slaughtered animal (2) suspended from the conveyor (3), at a given distance from the machine,
characterised in that it further consists in:
- displacing the gripping and ramming chassis (5) transversely to the direction (f₁) of displacement of the conveyor (3), so that a bearing and centering structure engages between two half-carcasses of the animal,
- controlling the approach of at least one pair of presser arms (18, 19) with respect to the bearing structure to come into contact with the opposite outer parts of the half-carcasses of animal in order to immobilise the animal,
- controlling relative approach of at least one pair of rammer arms (22) with respect to the bearing structure, in order to ensure application of the pad on the animal's skin,
- controlling relative moving apart of the rammer arms (22) and presser arms (18, 19) with respect to the bearing structure, and
- disengaging the gripping and ramming chassis (5) with respect to the conveyor.

10. The process according to claim 9, characterised in that it consists in detecting the size of the animal (2) and vertically positioning at least one pair of rammer arms (22).

11. The process according to claim 9, characterised in that, as soon as the presence of the animal is detected, the gripping and ramming chassis (5) is displaced in a direction (f₁) parallel to that of the conveyor and at a speed synchronised with the speed of the conveyor.

## Patentansprüche

1. Vorrichtung zum Aufbringen von Stempeln auf die Haut eines geschlachteten Tiere (2), das an einer Fördereinrichtung (3) aufgehängt ist,
wobei die Vorrichtung die Form eines Gestells (12) aufweist, das in Bezug auf die Förderrichtung der Fördereinrichtung (3) seitlich angeordnet werden kann und mit einer Halteeinrichtung zum Halten des Tiere und mindestens einem Paar Stempelarme (22) ausgerüstet ist, die jeweils einen Stempel (23) aufweisen und so steuerbar sind, daß sie aufeinander zu und voneinander weg bewegt werden können,
dadurch gekennzeichnet, daß
das Gestell (12) eine Tragkonstruktion (4) aufweist, die einen Faß- und Stempelrahmen (5) trägt, der durch ein Antriebsorgan (6) in im wesentlichen horizontaler Richtung (f) so verschiebbar ist, daß er über die Ebene (P), bis zu der sich die Tragkonstruktion (4) erstreckt, hinausragt, wobei der Faß- und Stempelrahmen (5) aufweist:
- eine Stütz- und Zentrierkonstruktion (14,15), die sich im wesentlichen in einer senkrechten Ebene über eine Höhe erstreckt, die höchstens gleich der Größe des Tiere und im allgemeinen kleiner als die Größe des Tiere ist, und zum Einschieben zwischen die beiden Karkassenhälften des Tiere vorgesehen ist, und
- mindestens ein Paar Preßarme (18,19), die so steuerbar sind, daß sie in Bezug auf die Stütz- und Zentrierkonstruktion (14,15) aufeinander zu und voneinander weg bewegt werden können und dazu vorgesehen sind, daß sie mit den einander gegenüberliegenden äußeren Teilen der Karkaseenhälften des Tieres in Kontakt gebracht werden können, um im Zusammenwirken mit der Stütz- und Zentrierkonstruktion (14,15) eine Festlegung des Tieres sicherzustellen.

2. Vorrichtung nach Anspruch 1, dadurch gekennzeichnet, daß der Faß- und Stempelrahmen (5) aus einem oberen, festen Teil (5₁) und einem unteren, senkrecht beweglichen Teil (5₂) besteht und die Vorrichtung eine Größenerfassungsvorrichtung (37) zur Erfassung der Größe des Tieres aufweist, die so ausgebildet ist, daß sie die Verschiebung des unteren, beweglichen Teils (5₂) in der Weise steuern kann, daß die Stempel auf die ausgewählten Bereiche des Tiers aufgebracht werden können.

3. Vorrichtung nach Anspruch 1, dadurch gekennzeichnet, daß die Tragkonstruktion (4) so am Gestell (12) angebracht ist, daß sie in einer waagrechten Richtung (f₁), die zur Richtung (f) der Bewegung des Faß- und Stempelrahmens (5) senkrecht ist, verschiebbar ist.

4. Vorrichtung nach Anspruch 1, dadurch gekennzeichnet, daß die Stütz- und Zentrierkonstruktion (14,15) aus zwei Systemen besteht.

5. Vorrichtung nach Anspruch 1, dadurch gekennzeichnet, daß jeder Stempelarm (22) so ausgebildet ist, daß er eine Halteeinrichtung (25) zur in allen Richtungen beweglichen Halterung eines Stempels (23) aufweist.

6. Vorrichtung nach Anspruch 5, dadurch gekennzeichnet, daß jeder Stempel (23) auf einer elastischen Rückstelleinrichtung (34) angebracht ist und mit einer Schutzhülse (32) versehen ist, die am $tempelarm (22) befestigt ist.

7. Vorrichtung nach Anspruch 6, dadurch gekennzeichnet, daß jeder Stempel (23) eine Relieffläche (23₁) aufweist, die als Kalotte oder als Stapel von runden Scheiben mit pyramidenförmigem Querschnitt ausgebildet ist, deren Breite von unten nach oben abnimmt

8. Vorrichtung nach Anspruch 5 oder 6, dadurch gekennzeichnet, daß jeder Stempel (23) eine Relieffläche (23₁) aufweist, in der Entlüftungslöcher münden, die zur Abführung der beim Stempeln erzeugten Dämpfe dienen.

9. Verfahren zum Aufbringen von Stempeln auf ein Tier (2) unter Verwendung einer Vorrichtung nach Anspruch 1, bei dem folgende Schritte durchgeführt werden:
- seitliches Anordnen der Vorrichtung (1) in Bezug auf die Richtung (f₁) der Verschiebung der Fördereinrichtung (3)
und
- Erfassen der Anwesenheit eines geschlachteten und an der Fördereinrichtung (3) aufgehängten Tiers (2),
dadurch gekennzeichnet, daß
anschließend folgende Schritte durchgeführt werden:
- Verschieben des Faß- und Stempelrahmens (5) in Querrichtung in Bezug auf die Richtung (f₁) der Verschiebung der Fördereinrichtung (3) in der Weise, daß eine Stutz- und Zentrierkonstruktion zwischen zwei Karkassenhälften des Tiers eingeschoben wird,
- Steuern mindestens eines Paars von Preßarmen (18, 19) in der Weise, daß sie sich zur Stütz- und Zentrierkonstruktion hin bewegen und mit einander gegenüberliegenden äußeren Teilen der Karkassenhälften des Tiers in Kontakt kommen, um das Tier festzulegen,
- Steuern mindestens eines Paars von Stempelarmen (22) in der Weise, daß sie sich zur Stütz- und Zentrierkonstruktion hin bewegen, um das Aufdrücken des Stempels auf die Haut des Tieres zu gewährleisten,
- Steuern der Stempelarme (22) und der Preßarme (18, 19) in der Weise, daß sie sich vom Stützsystem weg bewegen,
und
- Zurückfahren des Faß- und Zentrierrahmens (5) in Bezug auf die Fördereinrichtung (3).

10. Verfahren nach Anspruch 9, dadurch gekennzeichnet, daß die Größe des Tiers (2) erfaßt wird und mindestens ein Paar Stempelarme (22) auf eine senkrechte Position eingestellt wird.

11. Verfahren nach Anspruch 9, dadurch gekennzeichnet, daß nach der Erfassung der Anwesenheit des Tiers der Faß- und Steuerrahmen (5) in einer Richtung (f₁), die parallel zur Förderrichtung der Fördereinrichtung ist, mit einer Geschwindigkeit verschoben wird, die mit der Geschwindigkeit der Fördereinrichtung synchronisiert ist.
